**Europäisches Patentamt**

**European Patent Office**

**Office européen des brevets**

(19)

(11) Numéro de publication: **0 165 156**
**A1**

(12)
## DEMANDE DE BREVET EUROPEEN

(21) Numéro de dépôt: **85401020.4**

(51) Int. Cl.⁴: **G 01 N 11/14**

(22) Date de dépôt: **23.05.85**

(30) Priorité: **23.05.84 FR 8408004**

(43) Date de publication de la demande:
**18.12.85 Bulletin 85/51**

(84) Etats contractants désignés:
**BE DE FR GB IT NL SE**

(71) Demandeur: **Thibonnet, Bernard Raymond**
**1, Allée de la Vigie**
**F-13260 Carry le Rouet(FR)**

(71) Demandeur: **Staib, Philippe Henri**
**34, Sukhumvit - Soi 42 Samanchan**
**Bangkok(TH)**

(71) Demandeur: **Babet, Jean-Michel Christian**
**5, rue de Tilsitt**
**F-75008 Paris(FR)**

(72) Inventeur: **Thibonnet, Bernard Raymond**
**1, allée de la Vigie**
**F-I3260 Carry Le Rouet(FR)**

(74) Mandataire: **Moulines, Pierre et al,**
**Cabinet BEAU de LOMENIE 55, rue d'Amsterdam**
**F-75008 Paris(FR)**

(54) **Dispositif mesurant en continu la viscosité d'un fluide, notamment d'un combustible liquide.**

(57) Dispositif mesurant en continu la viscosité d'un fluide, notamment d'un combustible liquide.

Il comprend une chambre de mesure (4) traversée par le fluide, dans laquelle se trouve un dispositif à double entrefer, comportant un noyau cylindrique primaire (12) entraîné par une turbine (13) et un noyau cylindrique secondaire (14) entraîné en sens inverse par une turbine (15).

Deux capteurs (16) et (17) permettent de mesurer les vitesses de rotation des noyaux (12) et (14).

Les informations fournies par les capteurs sont transmises à un calculateur électronique.

L'invention est utilisée pour réguler les asservissements d'une pompe d'injection de moteur Diesel ou de brûleur de chaudière.

Fig.9

Dispositif mesurant en continu la viscosité d'un fluide, notamment
d'un combustible liquide.

La présente invention concerne un dispositif placé sur
un circuit d'alimentation en combustible et destiné à faciliter la
prise en compte de la viscosité d'un fluide, et notamment quand il
est nécessaire de réguler une pompe d'injection de moteur ou un
brûleur de chaudière.

Pour améliorer le fonctionnement des moteurs Diesel,
les industriels perfectionnent les équipements d'injection.

La puissance des moteurs utilitaires ayant été progressivement augmentée, cela a nécessité une adaptation des équipements
et notamment une augmentation de la pression d'injection. Ainsi, une
pression d'injection plus élevée pour les moteurs, nécessaire pour
former le mélange, diminue l'influence de la turbulence et améliore
la puissance et la consommation tout en réduisant les émissions de
gaz nocifs et les imbrûlés.

Pour parfaire ces améliorations, des systèmes de
régulation à composants électroniques sont installés pour commander
les différents organes d'asservissement. Le régulateur mécanique
habituel est remplacé par un actuateur qui reçoit ses informations
du calculateur électronique.

Les systèmes de régulation électronique peuvent être
de différents types et notamment à commande électromagnétique ou à
commande électrohydraulique suivant le modèle de pompe d'injection.

Dans la commande électromagnétique, l'actuateur est
un aimant linéaire actionnant coaxialement la tige de réglage de la
pompe qui est rappelée par un ressort.

Dans la commande électrohydraulique, l'actuateur est
un piston hydraulique qui actionne directement la tige de réglage
rappelée par un ressort. La pression de l'actuateur est réglée par
une soupape électromagnétique proportionnelle. Le circuit basse
pression de ces installations est alimenté en carburant par deux
pompes électriques, ces pompes étant alternativement en fonction.

Il existe aussi des systèmes où la commande est
assurée par un convertisseur électropneumatique qui reçoit ses
ordres du calculateur électronique.

Quel que soit le système d'asservissement retenu pour la commande de la pompe, à partir des informations reçues par le calculateur électronique, la régulation électronique peut être réalisée complètement quand tous les paramètres sont pris en compte.

Actuellement, les différents paramètres de fonctionnement que l'on peut prendre en compte sont :
- la position de la pédale d'accélération
- la position du coulisseau
- la vitesse de rotation
- le débit d'air
- la pression de suralimentation
- le débit de carburant
- la détermination du point mort haut
- les températures de l'air ambiant, de l'eau de refroidissement et du carburant
- le débit d'injection.

En ce qui concerne la viscosité du carburant, aucun système simple de contrôle ne permet de mesurer cette valeur en ·continu.

Actuellement, quelles que soient les caractéristiques des carburants employés et les variations de température qui, toutes deux, affectent la viscosité du carburant, la pompe de transfert fonctionne de la même façon. Par exemple, une simple et unique caractéristique du système de régulation compense les changements de pression causés par la différence de viscosité. Ce système de "tout ou rien" n'agit que dans les phases extrêmes du comportement des combustibles, c'est-à-dire quand ils sont froids et visqueux ou chauds et légers, acceptant ainsi une large tolérance dans les changements de viscosité et négligeant leurs variations intermédiaires.

Or, il apparaît aujourd'hui nécessaire dans un système de régulation électronique, où il est important de prendre en compte la totalité des paramètres, d'intégrer ainsi cette information essentielle du contrôle de la viscosité des carburants.

A titre d'exemple, on peut donner les chiffres concernant les écarts de viscosité cinématiques des gazoles que l'on trouve actuellement sur le marché des carburants, et qui peuvent osciller

entre 7,2 cst à 20° pour du gazole mélange de distillation atmosphérique, et  3,4 cst à la même température pour du gazole tête de
distillation sous vide.

Les différents gazoles étant d'autre part soumis à
des augmentations importantes de température dans les circuits, leur
viscosité initiale est modifiée. Une augmentation de température
commande une diminution de la viscosité et de la densité du carburant,
entraînant une diminution du rendement du moteur.

Sans régulation, prenant en compte la viscosité, on
évalue généralement la perte de puissance d'un moteur (iso-couple
et iso-puissance) entre 0,8 et 1% par élévation de température de
10° au-dessus de la température idéale d'injection qui se trouve à
20°C.

On voit donc qu'il est indispensable, pour éviter
ces pertes, de corriger en continu la régulation électronique
d'injection des moteurs. La prise en compte de la viscosité ne peut
qu'améliorer les performances des moteurs en diminuant leur consommation spécifique et ceci quel que soit le combustible employé. Il
est évident qu'un tel système de contrôle de la viscosité peut être
installé sur la régulation électronique d'un brûleur de chaudière
jouant sur les différents paramètres, tels que l'atomisation, le
cône de vaporisation ou l'écoulement du fuel à travers le brûleur.
Il en résulte un changement du rapport fuel/air qui n'influe pas
seulement sur l'efficacité de la chaudière, mais aussi sur la
formation de suie, de $SO_2$, de NO, rendant l'installation moins
polluante. Quel que soit le mode de pulvérisation choisi, mécanique,
par coupelle rotative, à air ou à vapeur, il faudra fournir une
certaine quantité d'énergie pour vaincre les forces de cohésion du
combustible qui dépendent en partie de sa viscosité. Dans le cas du
brûleur mécanique, par exemple, le fuel sous pression
pénètre par l'intermédiaire de canaux tangentiels dans la chambre
de rotation du gicleur. Il y a formation d'un film de fuel en rotation sur la paroi interne du gicleur dont l'épaisseur décroît avec
la vitesse de rotation et croît avec la viscosité. Il en résulte
que  plus le fuel est fluide, plus l'épaisseur du film diminue, ce
qui entraîne une diminution du débit du fuel. La viscosité est donc un paramètre important qui intervient lors du transfert et de la pulvérisation des fuels.

L'installation d'un viscosimètre permettant de remplacer le réglage de température traditionnel par un réglage de viscosité présente des avantages économiques et évite un surdosage de l'excès d'air. La diminution des suies entraîne une diminution de la fréquence des ramonages et une moindre cokéfaction au nez des brûleurs, réduisant ainsi le coût de la maintenance.

Il existe actuellement un certain nombre de systèmes de mesure de viscosité montés en ligne sur les installations de chauffage au fuel. La plupart de ces analyseurs mesurent la viscosité de cisaillement apparente du fuel. Plusieurs principes sont utilisés : chute de cylindre, écoulement dans un tube à travers un capillaire, à sphère vibrante ou à disques rotatifs. Ce sont des appareils compliqués, lourds et coûteux qui donnent des informations traitées ensuite par transmetteur pneumatique ou électronique. Souvent, ils ne réalisent pas une mesure de viscosité proprement dite, mais reconnaissent des différences de viscosité qui permettent de réagir sur le processus pour maintenir la viscosité demandée ou déclencher la phase suivante de la chaîne.

Chacun de nous a l'habitude de dire d'un liquide qu'il est visqueux quand il s'écoule difficilement, un peu comme une peinture épaisse : on dit, par contre, qu'un liquide est fluide lorsque son écoulement rappelle celui de l'eau. Il est évident que de telles notions sont insuffisantes et qu'il faut faire appel pour caractériser la viscosité à une définition plus précise, mettant en jeu des grandeurs mesurables. Les propriétés de viscosité d'un carburant illustrent particulièrement bien la complexité du phénomène.

Un même carburant devra être suffisamment visqueux pour éviter le grippage des pompes et des injecteurs par exemple, et devra être assez peu visqueux pour être transporté dans les canalisations et les filtres, et injecté dans la chambre de combustion du moteur.

Toutes ces exigences, en partie contradictoires, peuvent être satisfaites grâce à la non-linéarité de la viscosité

et aux anomalies des comportements d'écoulement du carburant, comme la thixotropie des paraffines contenues dans celui-ci, par exemple.

La viscosité caractérise la résistance opposée par deux couches de substances proches à leur glissement quand elles sont soumises à une contrainte appliquée dans leur plan.

Pour beaucoup de fluides, la viscosité dépend des conditions de mesure et plus particulièrement des conditions de cisaillement pendant la mesure.

Cependant, pour tous les types de fluides et quelle que soit l'influence du cisaillement sur la viscosité, il est bon de préciser le rôle joué par certains autres facteurs, tels que la température, la pression, la nature physico-chimique de la substance, sa constitution et, en particulier, la concentration dans le cas de dispersion ou de solution (paraffine dans le gazole, par exemple).

Pour les liquides, la viscosité décroît quand la température augmente : cette variation de viscosité peut atteindre 10% par degré centigrade pour les huiles. D'une manière générale, il faut retenir que la température a une influence très marquée sur la viscosité et que, par conséquent, tout travail doit être réalisé dans des conditions de température bien définies.

Le dispositif selon l'invention a pour but de faciliter la prise en compte de la viscosité dans le cas d'un traitement électronique des informations avant transmission des ordres aux organes d'asservissement.

Conformément à la présente invention, le dispositif fonctionne selon le principe de Newton.

Les conditions d'écoulement et de déformation des fluides sont fonction de la viscosité, c'est-à-dire de l'adhérence des molécules entre elles.

L'écoulement des fluides est influencé par une force de cisaillement tendant à s'opposer au mouvement. Si l'écoulement est décomposé en une multitude de couches superposées, elles donnent l'impression d'avancer comme les cartes d'un jeu.

Conformément à l'invention, le dispositif comprend une chambre de mesure traversée par le fluide à mesurer et dans

laquelle est disposé un appareil comportant deux organes entraînés en rotation en sens inverse qui présentent deux surfaces parallèles séparées par un espace délimitant entre elles une couche de fluide, lesdits organes rotatifs coopérant avec des capteurs permettant de mesurer les vitesses de rotation desdits organes et étant reliés à un calculateur qui, après traitement des informations fournies par lesdits capteurs, agit sur un régulateur électronique ou affiche les informations reçues.

Le dispositif selon l'invention fonctionne de la façon suivante. Installé soit directement, soit indirectement sur un circuit d'alimentation en combustible, une force de cisaillement est exercée entre les surfaces de deux mobiles rotatifs entraînés par des turbines. Cette force de cisaillement est fonction de la viscosité dynamique du fluide qui se trouve prisonnier entre les deux surfaces, multipliée par le gradient de vitesse entre les deux mobiles. Lorsque le gradient de vitesse est maintenu constant à un instant déterminé, la force de cisaillement correspond directement à la viscosité du fluide.

En conséquence, toute variation de la viscosité du liquide entraîne immédiatement une variation correspondante de la force de cisaillement entre les deux surfaces, donc une variation de vitesse entre les deux mobiles, mesurée par les capteurs.

Les signaux fournis en continu par les capteurs sont transmis à un calculateur qui, après traitement, peut soit agir sur un régulateur électronique, soit afficher les informations reçues.

Dans un autre mode de réalisation, la turbine entraînant l'un des mobiles est remplacée par un entraînement autonome et/ou asservi directement ou indirectement par l'arbre de la pompe d'injection Diesel ou du brûleur de chaudière. La vitesse du mobile entraîné par le moteur ou par l'arbre de la pompe d'injection ou du brûleur étant connue, la vitesse du mobile entraîné par la turbine traversée par le flux est variable suivant la valeur du couple de cisaillement correspondant à la viscosité.

Le dispositif de mesure de viscosité suivant l'invention présente donc un certain nombre d'avantages par rapport aux systèmes existants. Il est simple, peu coûteux, ne nécessite pas d'entretien particulier et peut être monté facilement sur n'importe quel type de circuit.

D'autres caractéristiques et avantages de l'invention seront mieux compris à la lecture de la description qui va suivre de plusieurs modes de réalisation et en se référant aux dessins annexés, sur lesquels :

- la figure 1 est une vue en coupe suivant la ligne I-I de la figure 2 d'un dispositif de mesure de viscosité suivant l'invention comportant deux disques plans entraînés par des turbines;

- la figure 2 est une vue en coupe suivant la ligne II-II de la figure 1;

- la figure 3 est une vue en élévation de la face d'un disque;

- la figure 4 est une vue en coupe partielle transversale de deux disques avec une entretoise;

- la figure 5 est une vue en plan de deux disques de diamètres différents;

- la figure 6 est une vue en coupe suivant la ligne VI-VI de la figure 7 d'un dispositif comportant deux disques de diamètres différents;

- la figure 7 est une vue en coupe du dispositif suivant la ligne VII-VII de la figure 6;

- la figure 8 est une vue en coupe du dispositif suivant la ligne VIII-VIII de la figure 7;

- la figure 9 est une vue en coupe longitudinale d'un dispositif comportant deux noyaux cylindriques entraînés par deux turbines;

- la figure 10 est une vue en coupe suivant la ligne X-X de la figure 9;

- la figure 11 est une vue schématique d'une installation de laboratoire comportant le dispositif suivant l'invention;

- la figure 12 est une vue schématique d'une autre installation de laboratoire comportant une aspiration sous vide et un dispositif suivant l'invention;

8                                    0165156

- la figure 13 est une vue en coupe longitudinale
partielle d'une pompe d'injection pour moteur Diesel comportant un
dispositif suivant l'invention;

- la figure 14 est une vue en perspective d'une pompe
d'injection comportant le dispositif suivant l'invention;

- la figure 15 est une vue en coupe d'une partie
d'un brûleur de chaudière sur lequel est monté le dispositif suivant
l'invention;

- la figure 16 est une vue en perspective d'un brûleur
de chaudière sur lequel est monté le dispositif suivant l'invention;

- la figure 17 est une vue schématique d'un dispositif
de régulation électronique d'une pompe de moteur Diesel.

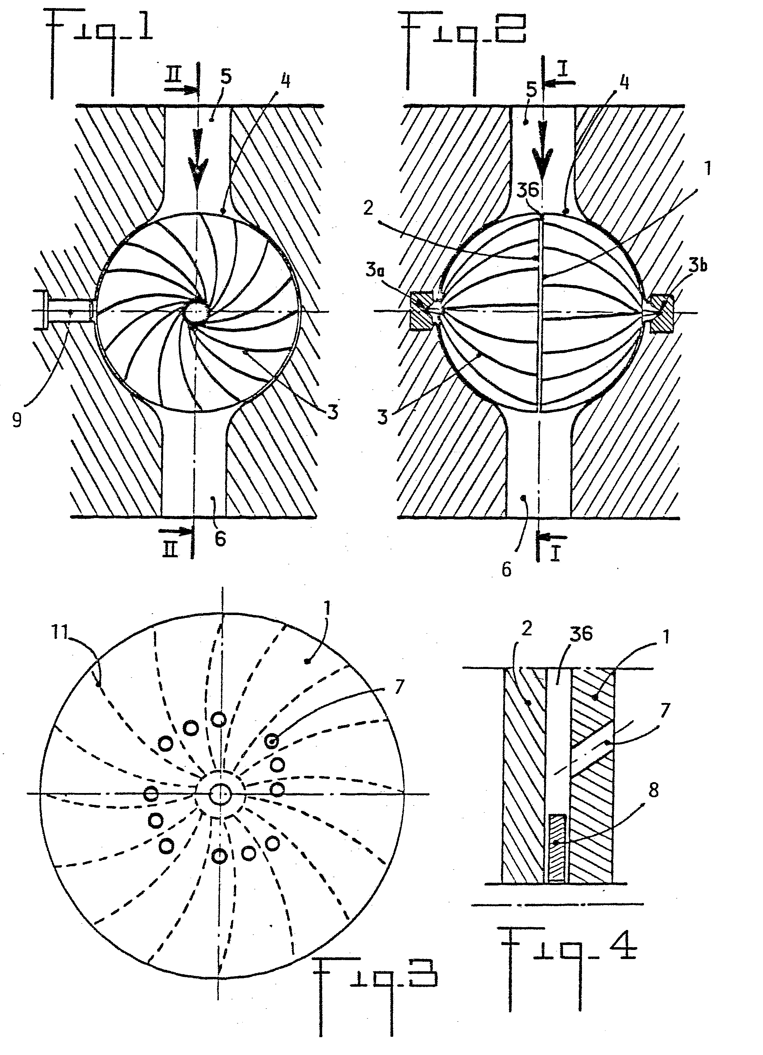

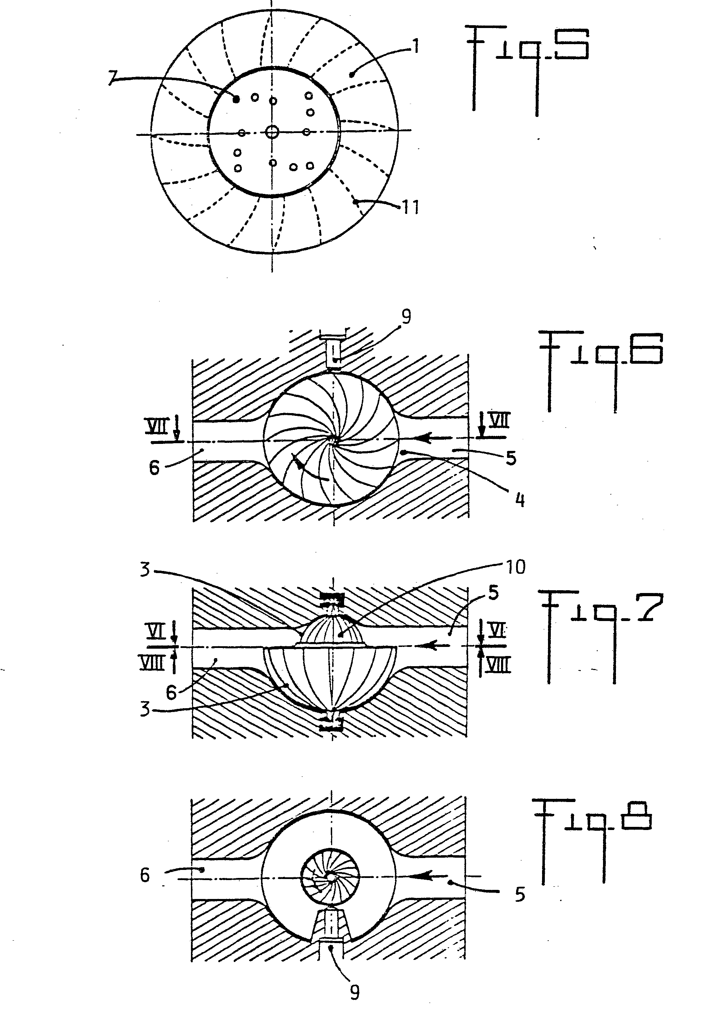

Aux figures 1, 2 et 3, on a représenté un dispositif
de mesure en continu de la viscosité d'un fluide qui comporte deux
disques plans 1 et 2 solidaires de deux turbines 3 tournant en sens
inverse et montées rotatives au moyen de paliers 3a, 3b dans une .
chambre de mesure 4 alimentée en fluide ou carburant par un canal 5
et dont l'évacuation s'effectue par un canal 6.

Les disques 1, 2 sont parallèles, séparés l'un de
l'autre par un espace 36 de manière à délimiter entre les surfaces
en regard une couche de fluide. Une force de cisaillement est exercée
entre les surfaces des deux disques 1, 2 situées en regard du fait
que ceux-ci sont entraînés en rotation par les turbines 3. Cette
force de cisaillement est fonction de la viscosité dynamique du
fluide qui se trouve prisonnier dans l'espace 36 entre les deux
disques 1, 2, multipliée par le gradient de vitesse entre les deux
disques. Lorsque le gradient de vitesse est maintenu constant à un
instant déterminé, la force de cisaillement correspond directement
à la viscosité du fluide.

En conséquence, toute variation de la viscosité du
fluide entraîne immédiatement une variation correspondante de la
force de cisaillement entre les deux surfaces des disques 1, 2,
donc une variation de vitesse entre les deux disques, mesurée par
des capteurs tels que 9. Deux capteurs 9 sont installés perpendiculairement à l'axe de l'appareil dont un seul est représenté à la
figure 1.

Les signaux fournis en continu par les capteurs 9
sont transmis à un calculateur qui, après traitement, peut soit agir
sur un régulateur électronique, soit afficher les informations reçues.

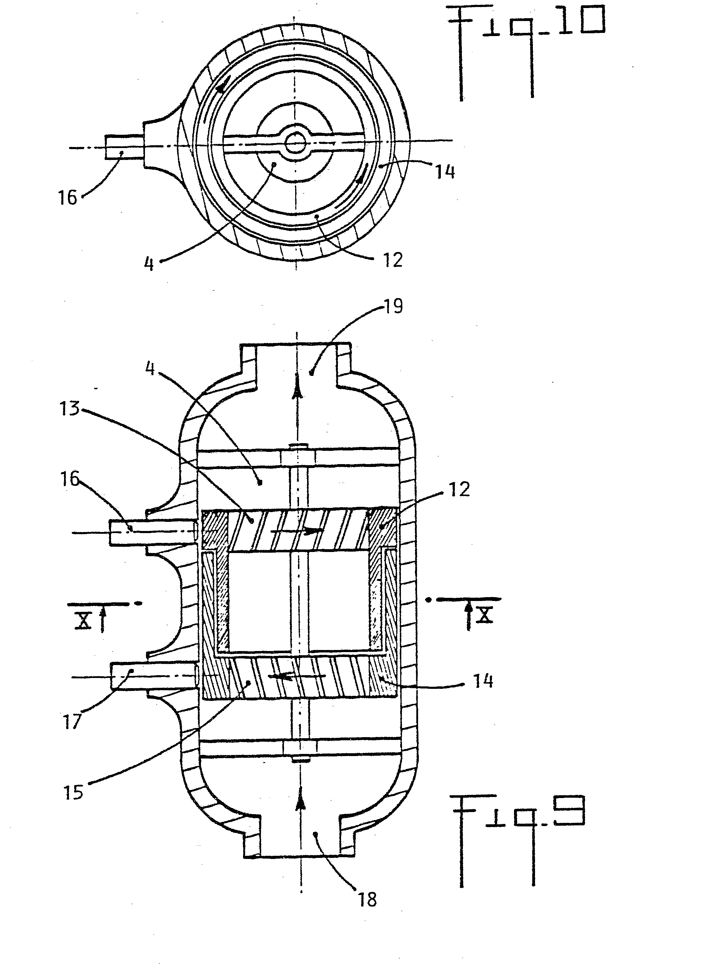

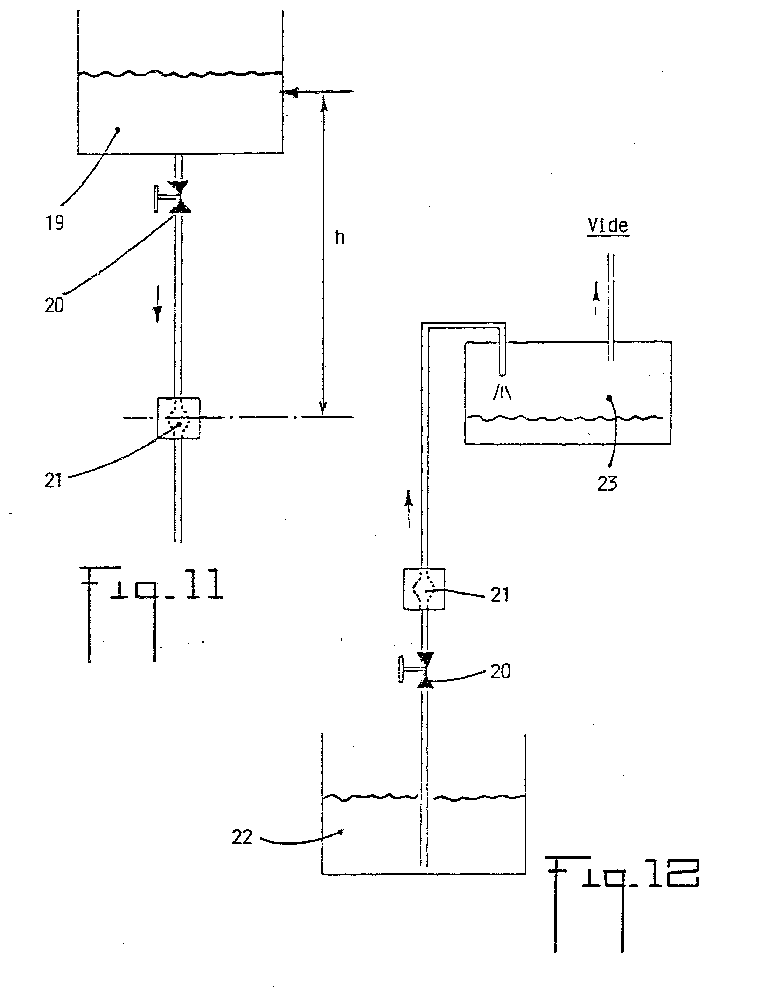

Comme représenté aux figures 3 et 4, l'un des deux
disques 1 comporte des trous radiaux 7 ou des fentes radiales de
gavage qui aspirent en permanence le fluide dont on veut suivre la
viscosité. Une entretoise 8 (figure 4) d'épaisseur variable suivant
l'étendue de la plage de viscosité à mesurer modifie l'écartement
entre les deux disques 1, 2.

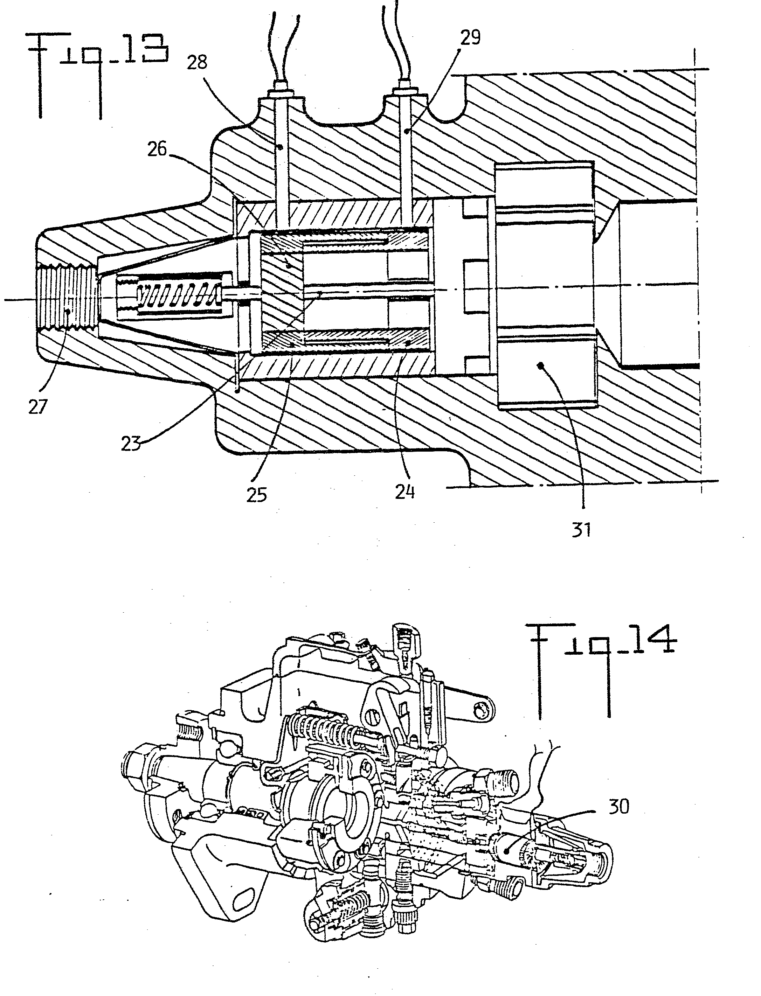

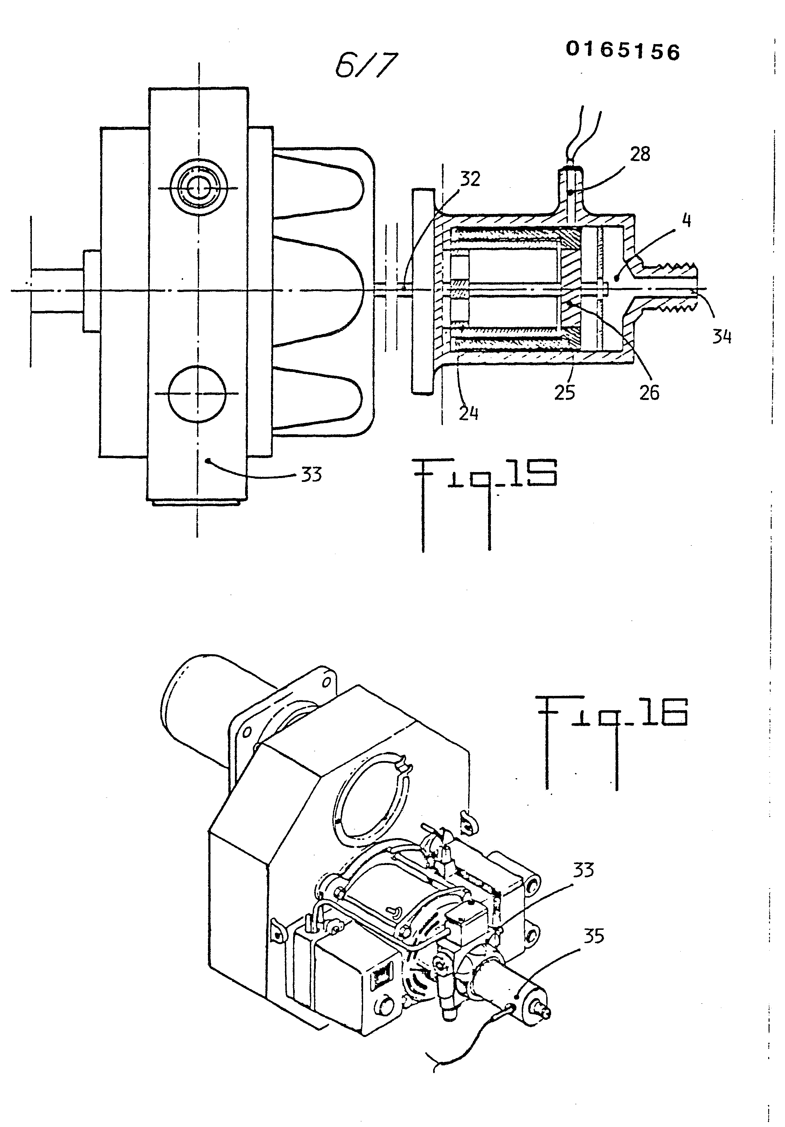

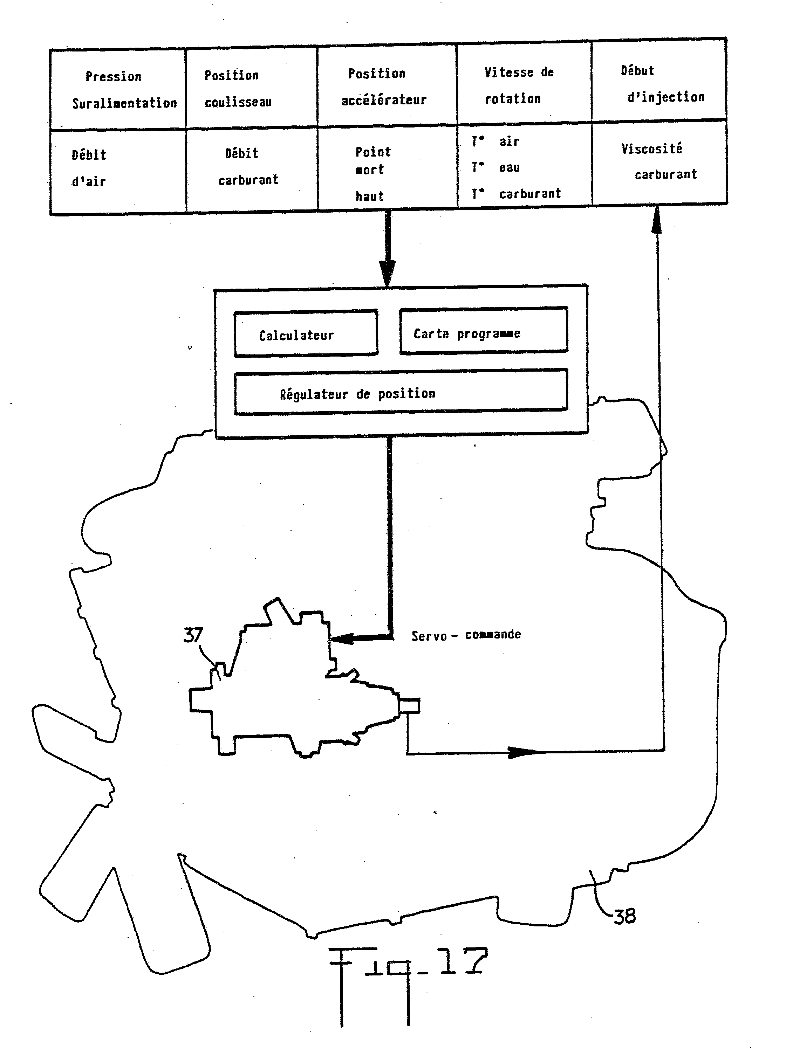

Aux figures 5, 6, 7, 8, on a représenté un dispositif
comportant deux disques plans, l'un 1 d'un diamètre supérieur à
l'autre 10 et solidaires de deux turbines 3. Le disque 1 comporte
des trous radiaux 7, une entretoise 8 est placée entre les deux
disques et deux capteurs 9 mesurent les vitesses de rotation des
turbines. Dans ce cas de figure, le grand disque 1 sert de débitmètre,
le petit disque 10 assurant la fonction de mesure de viscosité.

Le dispositif étant monté directement ou indirectement
sur un circuit d'alimentation en combustible, le fluide traverse en
permanence la chambre de mesure mettant en mouvement les turbines 3,
les capteurs de vitesse mesurent en continu le nombre d'impulsions
correspondant à chaque passage des ailettes 11 (figure 5) des turbines.
Les informations fournies sont transmises au calculateur.

Aux figures 9, 10, on a représenté un dispositif à
double entrefer comportant un noyau cylindrique primaire 12 entraîné
par le flux traversant une turbine 13 qui lui est solidaire et un
noyau cylindrique secondaire 14 entraîné en sens inverse par le flux
traversant une turbine 15 qui lui est solidaire. La disposition des
turbines n'entraîne pas de perte de charge sur le circuit et n'empêche
pas le passage du fluide en cas de blocage de celles-ci.

Deux capteurs 16 et 17 permettent de mesurer la
vitesse de rotation des noyaux 12 et 14. L'admission du fluide dans
la chambre de mesure 4 s'effectue par un orifice 18, l'évacuation
s'effectuant par un orifice 19.

L'appareil placé directement ou indirectement dans
un circuit d'alimentation en combustible, le fluide traversant la
chambre de mesure 4 met en rotation inverse les deux turbines 13 et

15 qui entraînent les deux noyaux 12 et 14. Les capteurs de vitesse 16 et 17 mesurent en continu la vitesse de rotation des deux noyaux 12 et 14. Les informations fournies sont transmises au calculateur.

Aux figures 11 et 12, on a représenté deux montages différents des dispositifs dans le cas de leur utilisation comme matériel de laboratoire.

Le premier montage représenté à la figure 11 comprend un réservoir en charge 19 alimentant à une hauteur prédéterminée h, par l'intermédiaire d'une vanne 20, un appareil de mesure de viscosité 21.

Le second montage représenté à la figure 12 comprend un réservoir 22 alimentant, par l'intermédiaire d'une vanne 20, un appareil de mesure de viscosité 21, celui-ci étant raccordé à un réservoir 23 mis en dépression par une pompe à vide.

Les deux montages permettent de mesurer en laboratoire les viscosités des fluides, sans utilisation d'un appareillage compliqué, les informations fournies par les capteurs étant analysées par un calculateur électronique, puis transférées soit sur un affichage électronique, soit sur un enregistreur de données.

A la figure 13, on a représenté un montage du dispositif de mesure de viscosité monté directement sur l'arbre 23 d'une pompe à injection rotative de moteur Diesel. L'appareil se compose d'un noyau interne 24 entraîné par un arbre 23. Le noyau externe 25 est muni d'une turbine 26 entraînée par le flux de combustible introduit par l'orifice 27 et tournant en sens inverse du sens de rotation de la pompe.

L'appareil est muni d'un capteur de vitesse 28 mesurant la vitesse de rotation du noyau externe 15. Il peut être aussi muni d'un capteur de vitesse 29 mesurant la vitesse de rotation de la pompe si cette information n'est pas déjà fournie par une autre source.

A la figure 14, on a représenté une perspective d'une pompe d'injection rotative Diesel munie du dispositif de mesure de viscosité 30 monté en haut de l'arbre de la pompe. Le dispositif peut être attelé à tout autre endroit de la pompe, notamment sur les pompes d'injection en ligne.

Le fonctionnement est le même que dans les autres montages décrits plus haut. Le fluide traversant la chambre de mesure avant la pompe de transfert 31 entraîne le noyau externe 25 dans un sens contraire au sens de rotation de la pompe et du noyau interne 24. La vitesse de rotation de la pompe étant connue, la vitesse de rotation du noyau externe 25 est fonction, d'une part, du débit de la pompe 31 et, d'autre part, de la viscosité du combustible. Les informations fournies par les capteurs sont analysées par le calculateur et transmises au régulateur de la pompe.

A la figure 15, on a représenté le montage du dispositif de mesure de viscosité monté directement sur un arbre 32 d'une pompe d'alimentation 33 d'un brûleur de chaudière. L'appareil se compose d'un noyau interne 24 entraîné par l'arbre 32. Le noyau externe 25 est muni d'une turbine 26 entraînée par le flux de combustible introduit par l'orifice 34 dans la chambre de mesure 4 et tournant en sens inverse du sens de rotation de la pompe 33. L'appareil est muni d'un capteur de vitesse 21 mesurant la vitesse de rotation du noyau externe 25, la vitesse de rotation de la pompe d'alimentation du brûleur étant connue. Si cette information n'est pas connue, un capteur de vitesse de rotation peut être installé.

On a représenté à la figure 16 une perspective d'un brûleur de chaudière muni d'un dispositif de mesure de viscosité 35 monté en haut de l'arbre de la pompe 33. Le fonctionnement de l'appareil est identique à ceux décrits précédemment. Les informations fournies par le capteur 28 sont analysées par le calculateur et transmises au régulateur du brûleur.

A la figure 17, on a représenté le schéma de régulation électronique d'une pompe d'injection rotative 37 du moteur Diesel 38.

Une augmentation du nombre des fonctions de la régulation électronique Diesel est possible par combinaison des systèmes de régulation. Ainsi, si l'on considère les réglages d'une pompe d'injection en fonction de la viscosité du carburant, ceux-ci peuvent être réalisés sur cinq plages de fonctionnement que l'on peut définir de la façon suivante :

- Ralenti

- 1/4 de charge

- 1/2 charge

- 3/4 de charge

- Pleine charge

Il est facile, en fonction des débits de carburant connus sur ces cinq plages de fonctionnement, donc des gradients de vitesse, de déterminer le réglage optimum de la pompe d'injection en fonction de la viscosité du carburant.

La pompe d'injection est munie d'un actuateur pour le débit et d'une soupape électromagnétique pour l'avance variable hydraulique. La commande du clapet de recirculation peut se faire par des valves électropneumatiques ou par convertisseur électro-pneumatique.

Un dispositif selon l'invention de mesure de viscosité de type à disques plans peut être monté sur un arbre attelé à un moteur ou à un arbre de pompe, la turbine d'entraînement du disque attelé étant supprimée.

Toute mesure de viscosité étant en étroite relation avec les variations de température, il est nécessaire de connaître celle-ci à tout moment par l'intermédiaire d'un capteur supplémentaire de type thermistor par exemple. Cette possibilité offre l'avantage de pouvoir soit modifier la température par réchauffage ou refroidissement du flux, pour amener le fluide à la viscosité recherchée, soit modifier les réglages des asservissements pour rechercher la meilleure exploitation possible du carburant aux température et viscosité affichées.

Les capteurs peuvent être de différents types, à fibre optique, inductif, magnétique, à effet Hall, capacitif, photo-électrique, à infrarouge, à ultrason, etc. On peut ménager des encoches ou des trous tangentiels sur les cylindres des noyaux, ceux-ci ayant une largeur calculée en fonction de la portée nominale du capteur.

Dans des cas très particuliers de mesure, les dispersions ont souvent tendance à modifier leur concentration le long des parois du système de mesure, ce qui provoque parfois des glissements. Pour pallier cet effet, on remplace les cylindres lisses des noyaux des entrefers par des cylindres striés.

13    0165156

Bien entendu, l'invention n'est pas limitée aux
modes de réalisation qui ont été décrits à titre d'exemple, mais elle
couvre également les modes de réalisation qui n'en différeraient que
par des détails, par des variantes d'exécution ou par l'utilisation
de moyens équivalents. Un appareil du même type peut notamment être
utilisé pour mesurer la viscosité des liquides autres que des combustibles. On peut également utiliser un appareil de ce type pour
asservir une régulation électronique avec recirculation des gaz
d'échappement ou injection électronique d'essence. Il va de soi
que de nombreuses modifications peuvent y être apportées sans sortir
du cadre de l'invention.

R E V E N D I C A T I O N S

---

1.    Dispositif mesurant en continu la viscosité d'un fluide, notamment d'un combustible liquide, circulant dans un circuit d'alimentation, caractérisé en ce qu'il comprend une chambre de mesure (4) traversée par le fluide à mesurer et dans laquelle est disposé un appareil comportant deux organes (1, 2) entraînés en rotation en sens inverse qui présentent deux surfaces parallèles séparées par un espace délimitant entre elles une couche de fluide, lesdits organes rotatifs (1, 2) coopérant avec des capteurs (9) permettant de mesurer les vitesses de rotation desdits organes (1, 2) et étant reliés à un calculateur qui, après traitement des informations fournies par lesdits capteurs, agit sur un régulateur électronique ou affiche les informations reçues.

2.    Dispositif suivant la revendication 1, caractérisé en ce que l'appareil placé dans la chambre de mesure (4) est constitué de deux noyaux cylindriques (12, 14) imbriqués l'un dans l'autre et présentant deux surfaces cylindriques délimitant entre elles un espace renfermant une couche de fluide et présentant entre leur surface cylindrique extérieure et la surface cylindrique extérieure de la chambre (4) un espace renfermant une couche de fluide, lesdits noyaux (12, 14) étant respectivement solidaires de deux turbines (13, 15) actionnées par le déplacement du fluide et entraînant les noyaux cylindriques en sens inverse.

3.    Dispositif suivant la revendication 1, caractérisé en ce que l'appareil placé dans la chambre de mesure (4) est constitué de deux disques (1, 2) présentant deux surfaces planes délimitant entre elles un espace renfermant une couche de fluide, les disques (1, 2) étant solidaires de deux turbines (3) tournant en sens inverse.

4.    Dispositif suivant la revendication 3, caractérisé en ce qu'au moins l'un des disques (1, 2) est percé de trous de gavage (7).

15 0165156

5. Dispositif suivant la revendication 3, caractérisé en ce qu'au moins l'un des disques (1, 2) est percé de fentes radiales de gavage.

6. Dispositif suivant la revendication 3, caractérisé en ce que les deux disques (1, 2) sont séparés par une entretoise (8).

7. Dispositif suivant les revendications 1 et 3, caractérisé en ce que l'un des organes rotatifs constitués d'un disque (1, 2) est entraîné par un arbre moteur.

8. Dispositif suivant les revendications 1 et 2, caractérisé en ce que l'un des organes rotatifs constitués d'un noyau cylindrique (24) est entraîné par un arbre moteur (23).

9. Dispositif suivant la revendication 3, caractérisé en ce que l'appareil comporte au moins un capteur de vitesse (9).

10. Dispositif suivant la revendication 2, caractérisé en ce que les parties cylindriques des noyaux (12, 14) comportent des encoches ou des trous tangentiels.

11. Dispositif suivant la revendication 2, caractérisé en ce que les parties cylindriques des noyaux (12, 14) sont striées.

Fig.1

Fig.2

Fig.3

Fig.4

Fig.5

Fig.6

Fig.7

Fig.8

0165156

Fig.10

Fig.9

Fig.11

Fig.12

Vide

Fig_13

28

26

29

27

23

25

24

31

Fig_14

30

0165156

Fig.15

Fig.16

| Pression Suralimentation | Position coulisseau | Position accélérateur | Vitesse de rotation | Début d'injection |
|---|---|---|---|---|
| Débit d'air | Débit carburant | Point mort haut | T° air T° eau T° carburant | Viscosité carburant |

Calculateur

Carte programme

Régulateur de position

37

Servo - commande

38

Fig_17

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | DE-C- 731 637 (JUNKERS) <br> * Page 2, lignes 89-108; figures * | 1 | G 01 N 11/14 |
| A | US-A-3 465 574 (F.D. EZEKIEL et al.) <br> * Colonne 1, lignes 12-21; figure 1 * | 1 | |
| A | FR-A-1 541 718 (T.N.O.) <br> * Page 2, colonne de droite, ligne 7 - page 3, colonne de gauche, ligne 43; figures 1,2 * | 1 | |
| A | US-A-4 067 230 (J.M. BALL) <br> * Colonne 2, lignes 32-50; figure 1 * | 1 | |

DOMAINES TECHNIQUES
RECHERCHES (Int. Cl.4)

G 01 N 11/00
G 01 N 9/00
F 02 D 41/00

Le présent rapport de recherche a été établi pour toutes les revendications

| Lieu de la recherche <br> LA HAYE | Date d'achèvement de la recherche <br> 29-08-1985 | Examinateur <br> ANTHONY R.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82